# EUROPÄISCHE PATENTANMELDUNG

(11) **EP 2 848 385 A1**
(43) Veröffentlichungstag der Anmeldung: **18.03.2015**
(21) Anmeldenummer: 14184679.0
(22) Anmeldetag: 12.09.2014
(51) Int. Cl.: B29C 49/46, B29C 49/42, B29C 49/06, B29C 49/12, B29C 49/36

(54) **Vorrichtung und Verfahren zum Umformen von Kunststoffvorformlingen mit Blasluftrückgewinnung**

(30) Priorität: 13.09.2013 DE 102013110132
(71) Anmelder: Krones AG, 93073 Neutraubling (DE)
(72) Erfinder: Winzinger, Frank, 93073 Neutraubling (DE); Handschuh, Eduard, 93073 Neutraubling (DE); Seidenberg, Katharina, 93073 Neutraubling (DE)
(74) Vertreter: Bittner, Bernhard

(57) **Zusammenfassung**

Eine Vorrichtung (1) zum Umformen von Kunststoffvorformlingen (10) zu Kunststoffbehältnissen (10a) mit einem Reinraum (20), mit wenigstens einer Blasstation (8) umfassend eine Blasform zur Formgebung der Kunststoffvorformlinge (10) mittels wenigstens eines Prozessdrucks (p1, p2, pi) und mit einer Entlastungseinrichtung (3) zum Entlasten des Prozessdrucks oder eines zu einem Rückgewinnungsdruck (R) reduzierten Prozessdrucks in die Atmosphäre (U), bei welcher die Entlastungseinrichtung (3) wenigstens eine Einrichtung (4) zur Gasdruckveränderung umfasst. Erfindungsgemäß ist durch die Einrichtung (4) zur Gasdruckveränderung eine Druckdifferenz zwischen dem Reinraum (2) und der Entlastungseinrichtung (3) einstellbar und aufrechterhaltbar.

## Beschreibung

Die vorliegende Erfindung betrifft eine Vorrichtung und ein Verfahren zum Umformen von Kunststoffvorformlingen zu Kunststoffbehältnissen mit einem Reinraum, mit wenigstens einer Blasstation umfassend eine Blasform zur Formgebung der Kunststoffvorformlinge mittels wenigstens eines Prozessdrucks und mit einer Entlastungseinrichtung zum Entlasten des Prozessdrucks oder eines zu einem Rückgewinnungsdruck reduzierten Prozessdrucks in die Atmosphäre, bei welcher die Entlastungseinrichtung wenigstens eine Einrichtung zur Gasdruckveränderung umfasst.

Gattungsgemäße Vorrichtungen und Verfahren zum Umformen von Kunststoffvorformlingen zu Kunststoffbehältnissen bei denen die Behandlung der Kunststoffbehältnisse unter sterilen Bedingungen in einem Reinraum erfolgt sind aus dem Stand der Technik gut bekannt.

Beispielsweise ist in der internationalen Patentanmeldung WO 2010/020529 A2 eine Vorrichtung zum Umformen von Kunststoffvorformlingen zu Kunststoffbehältnissen beschrieben, welche eine mehrere Blasstationen umfassende Transporteinrichtung und einen Reinraum aufweist. Mittels des Reinraums können aseptische Bedingungen während der Herstellung der Kunststoffbehältnisse und auch bei deren Abfüllung mit Getränken dauerhaft gewährleistet werden. Um einen diesbezüglichen Sterilisationsaufwand reduzieren zu können, ist an der Umformvorrichtung derjenige Bereich der Transporteinrichtung, an welchem die Blasstationen angeordnet sind, innerhalb des Reinraums und wenigstens ein weiterer Bereich der Transporteinrichtung außerhalb des Reinraums angeordnet. Insbesondere kann hierdurch die Größe des Reinraums reduziert werden, wodurch die zu sterilisierenden Bereiche an der Umformvorrichtung besonders gering gehalten werden können.

Aus der Patentschrift US 7,320,586 B2 ist eine Vorrichtung zum Blasformen von Preformen insbesondere zu Flaschen mit Hilfe eines Prozessdrucks bekannt, bei welchem der Prozessdruck nach der Umformung des Behältnisses zumindest teilweise in einem hierfür vorgesehenen Druckbehältnis als ein Rückgewinnungsdruck zurückgewonnen werden kann, bevor ein entsprechend reduzierter Restdruck in die freie Umgebungsluft entspannt wird. Unter Rückgewinnungsdruck wird dabei insbesondere das Druckniveau verstanden, welches nach dem Druckluftrecycling und insbesondere vor dem Beginn des Entlastens in der Flasche herrscht.

Weiterhin ist beispielsweise auch aus der DE 10 2011 10 259 oder der DE 10 2004 044 260 bekannt, dass zum Umformen von Kunststoffvorformlingen zu Kunststoffbehältnissen verschiedene Blasdrücke verwendet werden können und dabei Abgase des jeweils höheren Druckes nach dessen Nutzung zum Expandieren eines Kunststoffvorformlings als Nutzgas dem Volumen des geringeren Blasdrucks zugeführt werden können. Die Sterilität des Gases bleibt dabei erhalten, falls es vorher sterilisiert wurde.

Es besteht dabei jedoch die Problematik, dass nur solange ein Anteil des Abgases als Nutzgas dem Volumen des geringeren Blasdrucks zugeführt werden kann, bis der Gasdruck des Abgases kurz oberhalb des geringeren Blasdrucks liegt. In DE 10 2004 044 260 ist auch die Rückführung in ein Gasvolumen erwähnt, dessen Druck unterhalb des geringeren Blasdrucks liegt, jedoch besteht auch dann die selbe Problematik, da oft dieses Volumen bei nochmals verringertem Druck nicht die Sterilitätsanforderungen erfüllt. Selbst wenn auch dieses Gasvolumen steril sein sollte, müssen Abgase des Umformungsprozesses, die unterhalb dieses nochmals verringerten Druckes liegen in die Umgebung abgegeben werden. Dabei besteht die Gefahr der Kontamination der Abgasleitungen, wodurch in folgenden Umformungsprozessen mit dieser Vorrichtung auch Verunreinigungen zurück bis in den als steril vorgesehenen Bereich gelangen können. Insbesondere durch häufige Ventilsteuerungen und die daraus (zusammen mit großen Druckdifferenzen) resultierenden turbulenten Strömungen innerhalb der Leitungen können Kontaminationen durch die Abgasleitungen bis in den sterilen Bereich begünstigen.

Die WO 2012/153 268 schlägt daher eine spezielle Anordnung verschiedener Abgasleitungen und eine entsprechende Ventilsteuerung vor, mittels der das Zurückströmen von Verunreinigungen in den sterilen Bereich einer Vorrichtung zum Umformen von Behältnissen vermieden werden soll. Dabei ist vorgesehen, dass solange in dem umgeformten Behältnis ein Druck vorliegt, der über einem vorbestimmten Druck liegt, das Abgas in einen nicht sterilen Bereich abgeführt wird. Wenn dann der Innendruck im Behältnis unter einem Grenzwert sinkt und damit auch die Druckdifferenz und die Strömungsgeschwindigkeit abfallen, werden Ventile in den Abgasleitungen so geschaltet, dass das verbleibende Abgas in einen sterilen Bereich abgeführt wird.

Dieses Vorgehen zur Vermeidung von Kontaminationen des sterilen Bereichs durch die Abgasleitungen hat jedoch erhebliche Nachteile, da einerseits mindestens zwei Abgasleitungen vorhanden sein müssen, wovon eine steril gehalten werden muss. Außerdem sind mehrere Ventile und mindestens eine Steuereinrichtung zur Steuerung der Ventile in Abhängigkeit vom Innendruck im umgeformten Behältnis notwendig. Sowohl die dabei nötige mehrmalige Bewegung der Ventile bei jedem Blasprozess als auch die dadurch in den Gasleitungen entstehenden Strömungsänderungen und Verwirbelungen verursachen Lärm, der gemäß aktuellen Ansprüchen in Bezug auf den Lärmschutz des Bedienpersonals möglichst vermieden werden sollte.

Darüber hinaus wird gemäß der WO 2012/153 268 der Anteil des Abgases ungenutzt in den unsterilen Bereich abgeführt, der einen hohen Gasdruck aufweist und somit ressourcenschonend für weitere Prozesse nutzbar wäre. Lediglich der Anteil des Abgases, der einen geringen Gasdruck aufweist und daher nicht mehr mit einer Strömungsgeschwindigkeit in die Umgebung austreten würde, die einen Rücktransport von Kontaminationen wirkungsvoll verhindert, wird in den sterilen Bereich zurückgeführt.

Der vorliegenden Erfindung liegt daher die Aufgabe zu Grunde, eine einfache und kompakte Möglichkeit bereitzustellen, Abgase aus einem Umformungsprozess von Kunststoffvorformlingen zu Kunststoffbehältnissen so abführen zu können, dass eine Kontamination des sterilen Bereichs verhindert wird.

Diese Aufgabe wird durch eine Vorrichtung zum Umformen von Kunststoffvorformlingen zu Kunststoffbehältnissen mit einem Reinraum gelöst, wobei die Vorrichtung wenigstens eine Blasstation umfassend eine Blasform zur Formgebung der Kunststoffvorformlinge mittels wenigstens eines Prozessdrucks und eine Entlastungseinrichtung zum Entlasten des Prozessdrucks oder eines zu einem Rückgewinnungsdruck reduzierten Prozessdrucks in die Atmosphäre aufweist, bei welcher die Entlastungseinrichtung wenigstens eine Einrichtung zur Gasdruckveränderung umfasst, wobei durch die Einrichtung zur Gasdruckveränderung eine Druckdifferenz zwischen dem Reinraum und/oder einer mit dem Reinraum verbundenen Ablassleitung und der Entlastungseinrichtung herstellbar, aufrechterhaltbar, und insbesondere einstellbar, ist.

Vorteilhaft herrscht dabei in dem Reinraum ein höherer Druck als in der Entlastungseinrichtung. Bevorzugt wird daher ein Gas- bzw. Luftdruck der Entlastungseinrichtung bzw. in der Entlastungseinrichtung abgesenkt bzw. hier ein Unterdruck und/oder eine Strömung in Richtung eines Auslasses erzeugt bzw. aufrechterhalten.

Bevorzugt weist die Vorrichtung eine Transporteinrichtung auf, mittels derer die Kunststoffvorformlinge entlang eines vorgegebenen Transportpfades transportiert werden. Insbesondere werden die Kunststoffvorformlinge dabei während ihrer Expansion bzw. Umformung transportiert. Diese Transporteinrichtung weist bevorzugt einen beweglichen und insbesondere rotierenden Träger auf, an dem eine Vielzahl von Umformungsstationen bzw. Blasstationen zum Umformen der Kunststoffvorformlinge zu den Kunststoffbehältnissen angeordnet ist.

Vorzugsweise weisen die einzelnen Umformungsstationen bzw. Blasstationen jeweils Beaufschlagungseinrichtungen auf, um die Kunststoffvorformlinge mit einem gasförmigen Medium und insbesondere mit Blasluft zu deren Expansion zu beaufschlagen. Dabei können mehrere Ventileinrichtungen vorgesehen sein, welche die Beaufschlagung der Kunststoffvorformlinge mit unterschiedlichen Druckniveaus ermöglichen, wie etwa ein Ventil zur Bereitstellung eines Vorblasdrucks, ein Ventil zur Bereitstellung eines Zwischenblasdrucks und/oder ein Ventil zur Bereitstellung eines Fertigblasdrucks. Diese jeweiligen Ventileinrichtungen können dabei in Strömungsverbindung mit Reservoirs bzw. Verteilern stehen, welche das gasförmige Medium speichern bzw. bevorraten bzw. an die einzelnen Blasstationen verteilen. Diese Reservoirs können bevorzugt als Ringkanäle ausgeführt sein, welche besonders bevorzugt mehrere Umformungsstationen mit dem gasförmigen Medium versorgen.

Bei einer weiteren weiteren bevorzugten Ausführungsform weisen die Umformungsstationen bzw. Blasstationen jeweils stangenartige Körper bzw. Reckstangen auf, welche während des Expansionsvorgangs in die Kunststoffvorformlinge einführbar sind, um diese in deren Längsrichtung zu dehnen.

Vorteilhaft ist der Reinraum mittels wenigstens einer Wandung gegenüber einer Umgebung abgegrenzt. Besonders bevorzugt ist der Reinraum mittels wenigstens zwei Wandungen gegenüber der Umgebung abgegrenzt, wobei eine Wandung gegenüber der anderen Wandung beweglich ist. Vorteilhaft ist zwischen diesen Wandungen eine Dichtungseinrichtung vorgesehen, welche einen Bereich zwischen den bezüglich einander beweglichen Wandungen abdichtet. Bei dieser Dichtungseinrichtung kann es sich beispielsweise um ein sog. Wasserschloss handeln, welches einen umlaufenden und mit einer Flüssigkeit befüllbaren Kanal aufweist, in welchen ein Wandungsabschnitt der zu dem Kanal relativbeweglichen Wandung hineinragt. Es sind aber auch Gummidichtungen als Dichtungseinrichtungen denkbar.

Vorzugsweise umfasst die Einrichtung zur Gasdruckveränderung eine Pumpe, Turbine oder Venturidüse. Dadurch ist es möglich, im Abgaskanal einen kontinuierlichen Gasstrom, der von dem sterilen Bereich in Richtung eines Auslasses strömt, zu gewährleisten und somit das Eintreten von Verunreinigungen wirksam zu verhindern. Vorzugsweise wird durch eine solche Einrichtung zur Gasdruckveränderung eine Druckdifferenz zwischen dem sterilen Bereich und dem nicht sterilen Bereich aufrechterhalten, die oberhalb eines vorgegebenen Schwellenwertes liegt.

Unabhängig davon ist es auch möglich das Abgas (ventilgesteuert) auf verschiedene Leitungen zu verteilen. So könnte beispielsweise vorgesehen sein, dass Abgase mit einem sehr hohen Gasdruck recycelt werden und für weitere Umformungsprozesse verwendet werden. Beispielsweise könnte Abgas mit einem hohen Gasdruck einem Gasreservoir zugeführt werden, aus dem Gas für einen Vorblasprozess entnommen wird. Weiterhin ist es möglich, Abgase verschiedener Gasdrücke in Abhängigkeit des Abgasdruckes nicht nur einen Gasreservoir zuzuführen, sondern auf verschiedene Gasreservoirs aufzuteilen, in denen Gas unterschiedlicher Drücke vorgehalten wird. Dadurch werden verschiedene Recyclingsstufen für das Abgas generiert.

Bevorzugt ist vorgesehen, dass in einem Abgaskanal bzw. Auslasskanal (EXH-kanal) mittels der Einrichtung zur Gasdruckveränderung ein geringerer Gasdruck vorliegt als im Übrigen sterilen Bereich.

Der Abgaskanal ist bevorzugt zumindest abschnittsweise als Ringkanal ausgebildet. In diesem Ringkanal über welchen der Druck nach der letzten Recyclingstufe aus den umgeformten Behältnissen (bevorzugt in den Vorblaskanal) abgeführt wird, besteht somit bevorzugt ein gegenüber den übrigen sterilen Bereich ein leicht verringerter Druck, so dass während des Betriebs der Einrichtung zur Gasdruckveränderung eine kontinuierliche Strömung des Gases in Richtung des Auslasses vorliegt und somit keine Keime in den EXH-Kanal eindringen können.

Eine Kontaminierung von Bauteilen und/oder Bauteilgruppen der Umformvorrichtung innerhalb des Reinraums wird demnach besonders einfach dadurch verhindert, dass der Druck insbesondere in der Entlastungseinrichtung immer unterhalb des Reinraumdrucks gehalten wird.

Durch eine dementsprechende Sicherstellung eines definierten Druckgradienten wird vorteilhafter Weise gewährleistet, dass an der Entlastungseinrichtung eine Strömungsrichtung eines Druckmittels zum Umformen der Kunststoffvorformlinge immer nur aus dem Reinraum heraus gerichtet ist, wodurch konstruktiv denkbar einfach verhindert wird, dass Keime von außerhalb des Reinraums durch die Entlastungseinrichtung hindurch in den Reinraum gelangen und diesen kontaminieren.

Diese Maßnahme bewirkt außerdem eine Luftströmung in nur einer Richtung und unterbindet somit die Ausbreitung der Keime in Richtung des Kunststoffbehältnisses.

Idealerweise geschieht zusätzlich eine Restdruckentlastung aus dem Kunststoffbehältnis beim Abheben einer entsprechenden Blasdüse. Das Abgas aus dem Umformungsprozess kann durch ein Abheben der Blasdüse nahezu vollständig aus dem Behältnis abgeführt werden.

Durch diese körperlose Keimbarriere kann ein Überspringen der Keime von außerhalb des Reinraums in den Reinraum hinein außergewöhnlich einfach verhindert werden. Zusätzlich ist die hier vorgeschlagene körperlose Keimbarriere im Wesentlichen wartungsfrei. Die Abgasleitung ist vorzugsweise zu jedem Zeitpunkt steril. Eine Steuerung mehrerer Ventile zur Verteilung des Abgases auf sterile und nicht sterile Abgasleitungen ist nicht notwendig.

Bevorzugt wird die Funktion der Pumpe und/oder das Anliegen der vorgegebenen Druckdifferenz zumindest zeitweise und bevorzugt ständig über einen Drucksensor oder einen Strömungssensor überwacht. Weiterhin ist vorgesehen, dass die Vorrichtung im Fall eines Ausfalls der Einrichtung zur Gasdruckveränderung (bevorzugt automatisch) angehalten wird.

Um die Druckdifferenz dauerhaft aufrecht erhalten zu können und die Einrichtung zur Gasdruckveränderung entsprechend den aktuellen Bedürfnissen ansteuern zu können, ist es vorteilhaft, wenn die Entlastungseinrichtung Mittel zum Detektieren eines reinraumseitigen und/oder blasformseitigen Prozessdrucks oder Rückgewinnungsdrucks umfasst.

Gegebenenfalls können hierfür bereits an der Umformvorrichtung vorhandene Drucksensoren verwendet werden.

Kumulativ oder alternativ kann ein Rückschlagventil an der oder im Bereich der Entlastungseinrichtung vorgesehen sein. Mittels eines derartigen Rückschlagventils kann ebenfalls eine Gefahr einer in den Reinraum hinein gerichteten Luftströmung verringert werden.

In einer besonders bevorzugten Ausführungsvariante ist die Einrichtung zur Gasdruckveränderung zwischen einem Abgaskanal (EXH-Kanal) und einem Auslass für das Abgas angeordnet. Weiter bevorzugt ist der (Gas-) Auslass mit einem Schalldämpfer versehen. Bevorzugt handelt es sich bei der Einrichtung zur Gasdruckveränderung um eine Pumpe, besonders bevorzugt um eine rotativ arbeitende Pumpe. Bei einer solchen rotativ arbeitenden Pumpe ist es sehr einfach möglich die Leistung entsprechend der aktuell vorliegenden Druckdifferenz anzupassen. Bei der Pumpe kann es sich im einfachsten Fall auch um einen in der Leitung angeordneten Ventilator handeln.

In einer weiter bevorzugten Ausführungsform ist die Einrichtung zur Gasdruckveränderung bzw. die rotative Pumpe mit einer Schwungmasse gekoppelt bzw. verbunden. Dies bietet auf besonders einfache Weise die Möglichkeit die Einrichtung zur Gasdruckveränderung in zwei verschiedenen Modi betreiben zu können:

In einem ersten Modus fungiert die Einrichtung als Turbine welche die innere Energie des Abgases (bzw. des durchströmenden Fluids) in eine andere Energieform umwandelt. Diese Energieform kann beispielsweise kinetische Energie, elektrische Energie, potentielle Energie, Wärme oder eine andere geeignete Energieform sein. Denkbar ist beispielsweise die Umwandlung in potentielle Energie, die beispielsweise in einer mechanischen, magnetischen und/oder pneumatischen Feder gespeichert werden könnte. Bevorzugt wird die innere Energie des Abgases in Rotationsenergie umwandelt. Die Turbine wandelt die innere Energie des Abgases in Rotationsenergie um und stellt mechanische Antriebsenergie für die Schwungmasse bereit. Dadurch ist es möglich, den einen Teil der inneren Energie des Abgases in Form kinetischer Energie zu speichern. In diesem Modus bietet die durch die Turbine reduzierte Strömungsgeschwindigkeit des Fluids bzw. des Abgases den Vorteil, dass starke Druckgefälle weniger schnell abgebaut werden und so eine gleichmäßigere Druckverteilung vorliegt. Dies hat auch einen positiven Effekt auf die Geräuschentwicklung. Das geringere Druckgefälle und die dadurch verringerte Strömungsgeschwindigkeit des Fluids bewirken weniger turbulente Strömungen und weniger starke Geräuschentwicklungen. Es ist somit möglich, die innere Energie des Abgases zumindest teilweise in einer Schwungmasse zumindest temporär zu speichern. Es wäre jedoch auch eine elektrische Speicherung der Energie möglich, beispielsweise durch die Verwendung von Generatoren und Speichermitteln wie Batterien, Akkumulatoren oder Kondensatoren. Dazu ist in einer bevorzugten Ausführungsform vorgesehen, dass die Schwungmasse mit einem elektrischen und/oder pneumatischen Motor verbunden ist. Besonders bevorzug stellt die Schwungmasse einen Läufer von einem elektrischen Motor dar. Dies bietet in einer bevorzugten Ausführungsform die Möglichkeit, dass die Pumpe/Turbine sowohl (wie oben beschrieben) durch die Luftströmung als auch elektrisch und/oder pneumatisch angetrieben werden kann.

Sobald die Druckdifferenz im Abgaskanal zu gering wird und damit auch die Strömungsgeschwindigkeit des Abgases gering wird, bestünde erhöhte Gefahr einer Kontamination des Reinraums durch Verunreinigungen, die entgegen der vorgesehenen Strömungsrichtung durch den Abgaskanal in Richtung des Reinraums gelangen könnten. Um diesem Vorzubeugen wechselt die mit der Schwungmasse gekoppelte Einrichtung zur Gasdruckveränderung in diesem Fall selbständig in einen zweiten Modus, in dem die Einrichtung zur Gasdruckveränderung nicht mehr als Turbine sondern als Pumpe wirkt. In diesem Modus wird die in der Schwungmasse gespeicherte kinetische Energie genutzt, um die Einrichtung zur Gasdruckveränderung temporär als Pumpe für das im Abgaskanal zu nutzen. Dadurch bleibt auch bei geringem Druck im Abgaskanal eine ausreichende Strömungsgeschwindigkeit gewährleistet, die das Eindringen von Kontaminationen in den Reinraum durch den Abgaskanal wirksam verhindert.

Vorzugsweise bleibt der Druck im Abgaskanal (EXH-Kanal) niedriger als im Reinraum. Dieses Druckgefälle wird so lang aufrecht erhalten bis das EXH-Ventil geschlossen ist. Möglich ist auch, dass der Druck im Abgaskanal (EXH-Kanal) auch bei geschlossenem EXH-Ventil auf einem Druckniveau gehalten wird, dass niedriger als im Reinraum ist. Dadurch bleibt auch bei geschlossenem EXH-Ventil eine Druckdifferenz bestehen.

In einer bevorzugten Ausführungsform ist demnach die Einrichtung zur Gasdruckveränderung sowohl als Pumpe als auch als Turbine betreibbar.

Bevorzugt ist die Einrichtung zur Gasdruckveränderung jedoch nicht ausschließlich in der oben beschriebenen Weise durch Nutzung der inneren Energie des Abgases und Wirkung als Turbine, welche diese Energie in Rotationsenergie umwandelt, antreibbar. Bevorzugt weist die Einrichtung zur Gasdruckveränderung einen separaten Antrieb (z.B. Elektromotor) auf. Durch einen solchen Antrieb ist die Funktion der Einrichtung zur Gasdruckveränderung unabhängig vom Antrieb durch ein Druckgefälle gewährleistet.

Ein solcher separater Antrieb ist beispielsweise auch während oder nach Reinigungsprozessen vorteilhaft. Beispielsweise bei einem CIP- (Cleaning in Place) oder SIP- (Sterilization in Place) Prozess kann es sinnvoll sein, ein Druckgefälle in Richtung des Auslasses des EXH-Kanals zu generieren. Das Druckgefälle reicht üblicherweise nicht aus, um Reststoffe aus dem CIP oder SIP-Prozess aus den Leitungen zu befördern. Durch einen separaten Antrieb der Einrichtung zur Gasdruckveränderung kann das Druckgefälle jedoch erhöht werden und ein Abtransport von Reinigungsmitteln beschleunigt werden. Da das Reinigungsgas bevorzugt nicht (beispielsweise durch den Schalldämpfer) in die Umgebungsluft abgeleitet wird, kann ein separates Leitungssystem vorgesehen sein. Dabei kann auch eine Rückführleitung für das Sterilisationsmedium vorgesehen sein, alternativ ist es aber auch denkbar, das Sterilisationsmedium, ggf über einen Filter, in die Atmosphäre zu lassen.

Dies ist insbesondere nach einem Ausfall der Vorrichtung vorteilhaft, da dann, aber evtl. auch bei einem Austausch der Blasformen, ein CIP- oder SIP-Prozess durch die Ventilblöcke jeder Blasstation durchgeführt werden muss. Vorteilhaft wird schon während dieses Prozesses die (ggf. reparierte) Einrichtung zur Gasdruckveränderung (z.B. Pumpe) schon wieder eingeschaltet, so dass bei entsprechender Ventilsteuerung bereits wieder die gewünschte Druckdifferenz anliegt.

Bevorzugt ist daher die Einrichtung zur Gasdruckveränderung stromabwärts der Ventileinrichtung angeordnet.

Bevorzugt weist die Entlastungseinrichtung eine Ventileinrichtung auf, die eine Reinraumgrenze darstellt. Weiter bevorzugt mündet eine Zu- und/oder Ableitung für ein Reinigungs- und/oder Sterilisationsmittel in die Entlastungseinrichtung. Dabei ist besonders bevorzugt, dass an der Reinraumgrenze die Entlastungseinrichtung mündet. Besonders bietet sich an, dass die Zu- und/oder Ableitung für ein Reinigungs- und/oder Sterilisationsmittel in/an der Ventileinrichtung, die eine Reinraumgrenze darstellt, in die Entlastungseinrichtung mündet.

Das Reinigungs- und/oder Sterilisationsmittel wird insbesondere zentral aufbereitet und über einen Drehverteiler in die mitdrehenden Ringkanäle geleitet, wovon es zu den einzelnen Ventileinheiten gelangt, von denen es wiederum zu den EXH-leitungen geführt wird.

Alternativ kann die EXH-Leitung auch über ein Ventil in der Konsole (Verteilung von Hochdruckblasluft auf die einzelnen Druckniveaus in die Ringkanäle) der Vorrichtung mit Reinigungs- und/oder Sterilisationsmittel beaufschlagt werden. In diesem Fall strömt das Reinigungs- und/oder Sterilisationsmittel in einer Richtung durch das EXH-Ventil, in der es während des Betriebs nicht strömt.

In einer bevorzugten Ausführungsform werden zur Einstellung der gewünschten Druckdifferenz zusätzliche Pumpen zugeschaltet. Dies kann beispielsweise auch durch eine entsprechende Ventilsteuerung erfolgen, durch die zusätzlichen Pumpen mit dem EXH-Kanal verbunden werden. Beispielsweise können Pumpen von anderen Maschinen (wie z.B. einer Einrichtung zum Befüllen von Behältnissen (Füller)) zugeschaltet werden. Bevorzugt weist die gesamte Anlage ein Lüftungssystem auf, welches auch zur Einstellung der gewünschten Druckdifferenz genutzt werden kann. Es ist demnach möglich, dass Anordnung bzw. die Entlastungseinrichtung dezentral oder auch zentral fungiert. In einer bevorzugten Ausführungsform ist die Entlastungseinrichtung mehreren, bevorzugt allen, Blasstationen der Vorrichtung zugeordnet ist. Insbesondere weist die Anlage und insbesondere die Blasmaschine und/oder die Fülleinrichtung ein Lüftungssystem auf, welches die sterile Luft, die sich im Isolator bzw. im Reinraum befindet, in die Umgebung transportieren kann. Hierzu wird bevorzugt umgebungsseitig ein leichter Unterdruck erzeugt, wodurch eine Strömungsrichtung der sterilen Luft aus dem Reinraum nur in eine Richtung möglich wird. Es wäre daher möglich, die Druckluft, die aus dem Behältnis entlastet und aus dem Reinraum geführt werden soll, an diese Anlage anzuschließen.

Weiterhin wäre es denkbar, dass jeder der Umformstationen eine Pumpe zugeordnet ist, die es möglich macht, eine Strömungsrichtung einer Entlastungsluft in nur eine Richtung zu erlauben. Es wäre jedoch auch denkbar, dass für die Umformmaschine lediglich eine Pumpe vorgesehen ist, die diesen Effekt für alle Umformstationen generieren kann. Auch könnten Gruppen von Umformstationen jeweils eine Pumpe zugeordnet sein. Falls die zu fördernde Fluidmenge (Gasmenge) für eine einzelne Vakuumpumpe zu groß sein sollte wäre zusätzlich auch ein weiterer Kanal denkbar, in dem Abgas für andere Prozesse wiedergewonnen wird, der jedoch bei einem gegenüber dem/den anderen Druckniveaus, denen Abgas zu Recyclingzwecken zugeführt wird nochmals verringert ist. Aus diesem weiteren Kanal bzw. Gasvolumen könnte überschüssiges Gas über einen Schalldämpfer in die Umgebung abgeleitet werden oder als Arbeitsluft für andere Prozesse (wie z.B. die Steuerung der Reckzylinder etc.) verwendet werden.

In einer weiteren bevorzugten Ausführungsform liegt im (sterilen) EXH-Kanal ständig ein Überdruck sterilen Gases vor, so dass an dessen Auslass keine Keime von außen in den EXH-Kanal eindringen können. Dies könnte beispielsweise durch einen mit einer Drossel versehenen Bypass in einem Ventilblock oder mehreren Ventilblöcken realisiert werden. Vorzugsweise wird durch eine derartige Einrichtung zur Gasdruckveränderung Gas aus dem Vorblaskanal oder einem anderen (sterilen) Leitungssystem steriles Fluid (Gas) in den EXH-Kanal derart eingeleitet, dass die gewünschte Druckdifferenz aufrechterhalten bleibt. Alternativ oder als Ergänzung dazu ist eine Einrichtung zur Gasdruckveränderung durch eine (ventilgesteuerte) Verbindung in der Konsole denkbar. Außerdem wäre es denkbar, das EXH-Ventil im Ventilblock als Doppelsitzventil ausbilden, so dass die Luft über dieses entweder aus der Flasche oder aus einem anderen (sterilen) Kanal in den EXH-Kanal eingeleitet wird. Dabei könnte die Sterilluftversorgung z.B. durch eine Schwungscheibe auch bei (kurzzeitigen) Störungen gewährleistet werden.

Ist in dieser Ausführungsform über eine Verbindungsmöglichkeit (ein Ventil oder ein Druckminderer oder eine Leitungsverengung) der EXH-Kanal mit der Druckluftversorgung verbunden, so kann diese Verbindungsmöglichkeit auch als Einrichtung zur Gasdruckveränderung dienen, wenn ständig (sterile) Blasluft, welche noch nicht im Behälter war, über diese Verbindungsmöglichkeit in den EXH-Kanal geleitet wird. Diese Verbindungsmöglichkeit könnte auch in einem Ventilblock einer Blasstation untergebracht werden. Die Verbindungsmöglichkeit stellt sozusagen einen Kurzschluss her.

Außerdem ist die vorliegende Erfindung auf eine Anlage zum Behandeln von Behältnissen gerichtet, die eine wie oben beschriebene Vorrichtung aufweist.

Weiterhin bezieht sich die vorliegende Erfindung auf ein Verfahren zum Umformen von Kunststoffvorformlingen zu Kunststoffbehältnissen in einem Reinraum mittels wenigstens einer Blasstation umfassend eine Blasform in der zur Umformung der Kunststoffvorformlinge diese mit wenigstens einem Prozessdrucks beaufschlagt werden und der Prozessdruck oder ein zu einem Rückgewinnungsdruck reduzierter Prozessdruck mittels einer Entlastungseinrichtung in die Atmosphäre entlastet wird, wobei der Gasdruck in der Entlastungseinrichtung zumindest temporär durch wenigstens eine Einrichtung zur Gasdruckveränderung verändert wird, wobei durch die Einrichtung zur Gasdruckveränderung eine Druckdifferenz zwischen dem Reinraum und/oder einer mit dem Reinraum verbundenen Ablassleitung der Entlastungseinrichtung hergestellt und/oder eingestellt und/oder aufrechterhalten wird.

Bevorzugt ist dabei, dass die Druckdifferenz zwischen dem Reinraum und der Entlastungseinrichtung mittels einer Pumpe eingestellt und/oder aufrechterhalten wird.

Bevorzugt ist der Gasdruck im Reinraum höher als in der Entlastungseinrichtung und der Gasdruck in der Entlastungseinrichtung ist höher als in der freien Atomsphäre. Beispielsweise ist der Überdruck (im Vergleich zur Atmosphäre) im Reinraum bei 20 mbar und der Überdruck in der Entlastungseinrichtung bei 10 mbar.

Dass der Gasdruck in der Entlastungseinrichtung höher als in der freien Atomsphäre und im Reinraum ist, ist auch denkbar, wenn der Entlastungseinrichtung sterile Luft zugeführt wird. Beispielsweise ist der Überdruck (im Vergleich zur Atmosphäre) in dem Fall im Reinraum bei 10 mbar und der Überdruck in der Entlastungseinrichtung bei 20 mbar. Wenn also nach dem Blasprozess das EXH-Ventil geöffnet wird, strömt nach der (wesentlichen) Entlastung nicht alles an Abgas aus dem Behälter heraus - dies wird dann erst (teilweise) durch das Abheben der Blasdüse bewerkstelligt.

Weiter bevorzugt ist, dass zumindest ein Anteil einer inneren Energie des Abgases zumindest zeitweise durch eine Turbine rückgewonnen wird. Bevorzugt wird die durch die Turbine rückgewonnene Energie in einer Schwungmasse in Form kinetischer Energie zumindest temporär gespeichert. Daneben oder alternativ dazu ist beispielsweise auch die Speicherung in Form elektrischer Energie möglich. Diese könnte beispielsweise in einem Akkumulator gespeichert werden. Außerdem wäre auch die Einspeisung in ein Netzwerk denkbar, wo die Energie für andere Prozesse zur Verfügung steht.

Bevorzugt ist außerdem, dass durch die Entlastungseinrichtung ein ständiges Strömen von Gas aus dem Reinraum und/oder einer mit dem Reinraum verbundenen Leitung bei einer geöffneten Verbindung verursacht wird.

Weitere Vorteile, Ziele und Eigenschaften vorliegender Erfindung werden anhand anliegender Zeichnung und nachfolgender Beschreibung erläutert, in welchen beispielhaft eine Umformvorrichtung und Entlastungseinrichtungen mit mindestens einer Einrichtung zur Gasdruckveränderung zur Einstellung einer Druckdifferenz zwischen dem Reinraum und der Entlastungseinrichtung dargestellt und beschrieben sind. Hierbei zeigen:
Fig. 1 schematisch eine Ansicht einer Anlage zum Herstellen von Kunststoffbehältnissen mit einer in einem Reinraum angeordneten Blasstation;
Fig. 2 schematisch einen beispielhaften Verlauf des Leitungssystems in einer Umformvorrichtung und Entlastungseinrichtung;
Fig. 3 schematisch den Aufbau des Leitungssystems in einer Umformungsvorrichtung; und
Fig. 4 schematisch ein Schaltdiagramm eines Entlastungsventils in Abhängigkeit eines Abgasdrucks.

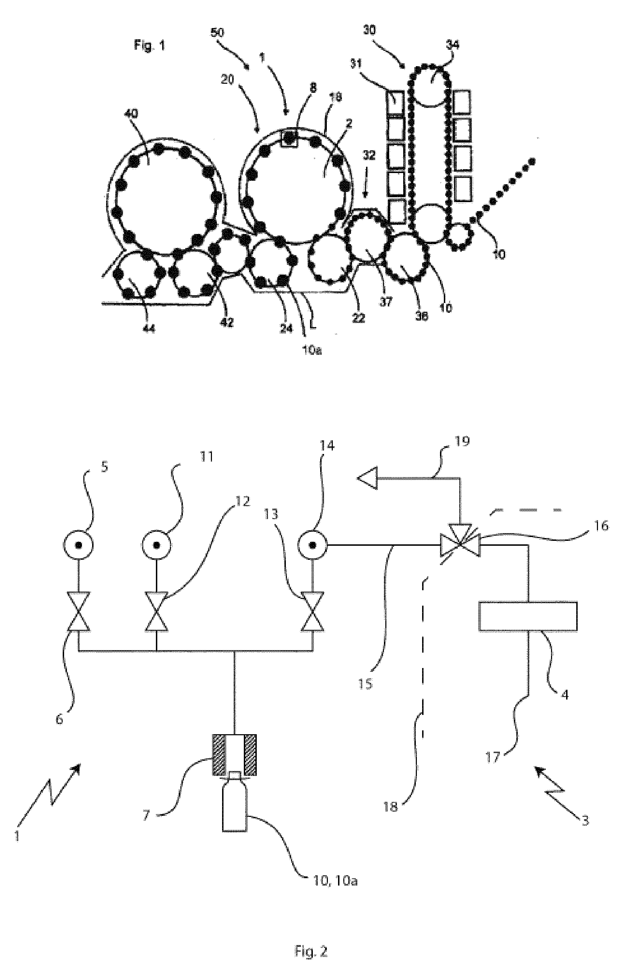

Fig. 1 zeigt eine schematische Darstellung einer Anlage zum Herstellen von Kunststoffbehältnissen. Diese Anlage 50 weist eine Heizeinrichtung 30 auf, in der Kunststoffvorformlinge 10 erwärmt werden. Dabei werden diese Kunststoffvorformlinge 10 mittels einer Transporteinrichtung 34, wie hier einer umlaufenden Kette, durch diese Heizeinrichtung 30 geführt und dabei mit einer Vielzahl von Heizelementen 31 erwärmt. An diese Heizeinrichtung 30 schließt sich eine Übergabeeinheit 36 an, welche die Vorformlinge 10 an eine Sterilisationseinrichtung 32 übergibt. Diese Sterilisationseinrichtung 32 weist dabei hier ebenfalls ein Transportrad 37 auf und an diesem Transportrad 37 oder auch stationär können Sterilisationselemente angeordnet sein. In diesem Bereich ist beispielsweise eine Sterilisation durch Wasserstoffperoxidgas oder auch durch elektromagnetische bzw. UV-Strahlung möglich. Insbesondere wird in diesem Bereich eine Innensterilisation der Vorformlinge durchgeführt. Eine Sterilisation im Bereich der Heizeinrichtung 30 oder vor der Heizeinrichtung 30 ist auch denkbar.

Das Bezugszeichen 20 bezeichnet in seiner Gesamtheit einen Reinraum, dessen Außenbegrenzungen hier durch die Linie L angedeutet ist. In einer weiteren bevorzugten Ausführungsform ist der Reinraum 20 nicht nur im Bereich des Transportrads 2 und Befüllungseinrichtung 40 angeordnet, sondern beginnt möglicherweise schon im Bereich der Heizeinrichtung 30, der Sterilisationseinrichtung 32, der Kunststoffvorformlingzuführung und/oder der Kunststoffvorformlingherstellung. Man erkennt, dass im gezeigten Beispiel der Reinraum 20 in dem Bereich der Sterilisationseinheit 32 beginnt. In diesem Bereich können Schleuseneinrichtungen vorgesehen sein, um die Kunststoffvorformlinge in den Reinraum 20 einzuführen, ohne dass dabei eine größere Menge Gas aus dem Reinraum 20 ausströmt und so verloren geht.

Der Reinraum 20 ist, wie durch die gestrichelte Reinraumgrenze 18 bzw. Linie L angedeutet, an die Außengestalt der einzelnen Anlagenkomponenten angepasst. Auf diese Weise kann das Volumen des Reinraums reduziert werden.

Das Bezugszeichen 1 bezeichnet in ihrer Gesamtheit eine Umformungsvorrichtung, bei der an einem Transportrad 2 eine Vielzahl von Blasstationen 8 angeordnet ist. Mit diesen Blasstationen 8 werden die Kunststoffvorformlinge 10 zu Behältnissen 10a expandiert.

Auch wenn in Fig. 1 nicht detailliert gezeigt, ist es möglich, dass sich nicht der gesamte Bereich des Transporteinrichtung 2 innerhalb des Reinraums 20 befindet, sondern der Reinraum 20 bzw. Isolator kanalartig ausgeführt ist so größere Bereich der Anlage wie z.B. Antriebe, Tragkonstruktionen, Druckerzeugungseinrichtungen und andere außerhalb des Reinraums angeordnet sind.

Das Bezugszeichen 22 bezieht sich auf eine Zuführeinrichtung, welche die Vorformlinge an die Umformungseinrichtung 1 übergibt und das Bezugszeichen 24 auf eine Abführeinrichtung, welche die hergestellten Kunststoffbehältnisse 10a von der Umformungsvorrichtung 1 abführt. Man erkennt, dass der Reinraum 20 in dem Bereich der Zuführeinrichtung 22 und der Abführeinrichtung 24 jeweils Ausnehmungen aufweist, welche diese Einrichtungen 22, 24 aufnehmen. Auf diese Weise kann in besonders vorteilhafter Weise eine Übergabe der Kunststoffvorformlinge 10 an die Umformungsvorrichtung 1 bzw. eine Übernahme der Kunststoffbehältnisse 10a von der Umformungsvorrichtung 1 erreicht werden.

Mit einer Übergabeeinheit 42 werden die expandierten Kunststoffbehältnisse an eine Befüllungseinrichtung 40 übergeben und von dieser Befüllungseinrichtung 40 anschließend über eine weitere Transporteinheit 44 abgeführt. Dabei befindet sich auch die Befüllungseinrichtung 40 innerhalb des besagten Reinraums 20. Auch im Falle der Befüllungseinrichtung wäre es möglich, dass nicht die gesamte Befüllungseinrichtung 40 mit beispielsweise einem Reservoir für ein Getränk vollständig innerhalb des Reinraums 20 angeordnet ist, sondern auch hier lediglich diejenigen Bereiche, in denen tatsächlich die Behältnisse geführt werden. Insoweit könnte auch die Befüllungseinrichtung in ähnlicher Weise aufgebaut sein wie die Vorrichtung 1 zum Umformen von Kunststoffvorformlingen 10.

Wie erwähnt, ist der Reinraum 20 im Bereich der Vorrichtung 1 auf einen geringstmöglichen Bereich reduziert, nämlich im Wesentlichen auf die Blasstationen 8 selbst. Durch diese kleinbauende Gestaltung des Reinraums 20 ist es leichter und schneller möglich, einen Reinraum überhaupt herzustellen und auch die Sterilhaltung in der Betriebsphase ist weniger aufwändig. Auch wird weniger Sterilluft benötigt, was zu kleineren Filteranlagen führt und auch die Gefahr von unkontrollierter Wirbelbildung wird reduziert.

Fig. 2 zeigt schematisch einen beispielhaften Verlauf des Leitungssystems in einer Umformvorrichtung 1 und Entlastungseinrichtung 3 mit mindestens einer Einrichtung 4 zur Gasdruckveränderung zur Einstellung einer Druckdifferenz zwischen dem Reinraum 20 und der Entlastungseinrichtung 3.

Das Leitungssystem umfasst in diesem Beispiel einen Ringkanal 5 der beispielsweise für einen Vorblasdruck p1 genutzt wird. Über ein Ventil 6 und eine entsprechende Zuleitung kann der Vorblasdruck p1 zu einer Blasdüse 7 geleitet werden, die wiederum Teil einer (in Fig. 2 nicht gezeigten) Blasstation 8 ist. In dieser Blasstation 8 kann mittels des an der Blasdüse 7 anliegenden Drucks ein Vorformling 10 zu einem Behältnis 10a expandiert werden. Dazu ist in der Regel jedoch der Vorblasdruck p1, der beispielsweise zwischen 5 und 20 bar liegt, nicht ausreichend, so dass über einen weiteren Ringkanal 11 ein anderer Druck, nämlich der Endblasdruck p2 mittels eines zugehörigen Ventils 12 in das Leitungssystem und damit zur Blasdüse 7 geleitet werden kann. Beim Einleiten des Endblasdrucks p1 ist das Ventil 6 für den Vorblasdruck p1 geschlossen.

Nachdem Expandieren des Vorformlings 10 zu einem Behältnis 10a wird auch das Ventil 12 geschlossen und das im Leitungssystem und dem Behältnis befindliche Gas, das einen erhöhten Druck aufweist, über ein weiteres Ventil 13 einem Abgas-Ringkanal (EXH-Ringkanal) 14 zugeleitet. Auch dieser Ringkanal 14 ist steril und ist somit Teil des Reinraumes 20. Das im Ringkanal 14 befindliche Gas kann zur weiteren Verwendung beispielsweise einen Druckgasreservoir für den Vorblasdruck p1 zugeführt werden. Das Ableiten des im Ringkanal 14 befindlichen (sterilen) Abgases über eine (nicht gezeigte) Leitung in das Druckgasreservoir für den Vorblasdruck p1 erfolgt bis zu einem vorgegebenen Druck. Sobald der Druck im Ringkanal 14 unterhalb dieses Niveaus sinkt, wird verbleibendes Abgas über eine entsprechende Ableitung 15 abgeführt. Es ist aber für ein Druckluftrecycling auch möglich nach dem Schließen des Ventils 12 nochmal das Ventil 6 aufzumachen und anschließend erst das Ventil 13 zu öffnen. In dieser Ableitung 15 befindet sich ein Umschaltventil 16, das bevorzugt die Reinraumgrenze 18 bildet. Stromabwärts dieses Ventils ist eine Pumpe 4 angeordnet, die bei geöffnetem Ventil 16 auch bei geringem Restdruck im Ringkanal 14 für einen kontinuierlichen Gasstrom in Richtung des Gasauslasses 17 sorgt. Dadurch wird einfach und gleichzeitig wirkungsvoll verhindert, dass Verunreinigungen durch den Auslass 17 zurück in Richtung des Ringkanals 14 gelangen können.

Die Ventile 6, 12 und 13 sind in einem Ventilblock angeordnet, welcher ebenfalls Teil einer jeden Blasstation 8 ist. Die schon angesprochene Konsole befindet sich stromaufwärts von den Ringkanälen 5, 11 und 14 und Verteilt die Blasluft mittels Druckminderer auf die Ringkanäle 5 und 11. In einer Ausführungsform ist es auch möglich, dass Ringlkanal 14 direkt von der Konsole gespeist wird, um den Überdruck zu erzeugen. In dem Fall kann auch die Pumpe 4 verzichtet werden.

Im Fall eines Stillstands der Umformungsvorrichtung kann das Ventil 16 geschlossen werden und gleichzeitig das gesamte Leitungssystem stromaufwärts dieses Ventils unter einen leichten Überdruck gesetzt werden, so dass auch während eines (kurzen) Stillstands keine Kontaminationen des Reinraums auftreten können. Die Reinigung des Ventils 16 und des stromabwärts dieses Ventils angeordneten Leitungssystems ist durch einen so genannten CIP-Kanal 15, 19 möglich. Durch diesen Kanal 15, 19 kann eine Reinigungs-oder Sterilisationslösung durch das Ventil 16 und in das stromabwärts davon befindliche Leitungssystem geleitet werden. Bevorzugt erfolgt dies zu einem Zeitpunkt, zu dem die Pumpe 4 bereits wieder in Betrieb ist, so dass ein kontinuierlicher Gasstrom bis zum Auslass 17 gewährleistet werden kann. Die Vorrichtung (bzw. Pumpe) (4) kann zeitweise oder kontinuierlich laufen. In einer (nicht gezeigten Variante) stellt die Vorrichtung (4) einen Anschluss an das (bevorzugt kontinuierlich laufende) Abluftsystem der Gesamtanlage dar. Wenn das Umschaltventil 16 den Anschluss zur Pumpe wieder freigibt, liegt somit bereits wieder die vorgegebene Druckdifferenz an, die den kontinuierlichen Gasstrom gewährleistet. Durch einen solchen kontinuierlichen Gasstrom ist die Lärmbelastung am Gasauslass 17 sowohl bei der Reinigung als auch im regulären Betrieb gegenüber Systemen mit stark schwankenden Drücken deutlich reduziert. Zusätzlich kann am Gasauslass 17 auch ein (nicht gezeigter) Schalldämpfer vorgesehen sein. Das CIP- oder SIP-medium strömt hier bevorzugt im Sterilisationsmodus durch den Kanal 14 über Leitung 15 über das Ventil 16 in Leitung 19 und von dort aus zurück in den Reinraum. In dem Fall wird 4 und 17 nicht sterilisiert und Linie 18 bildet die Reinraumgrenze.

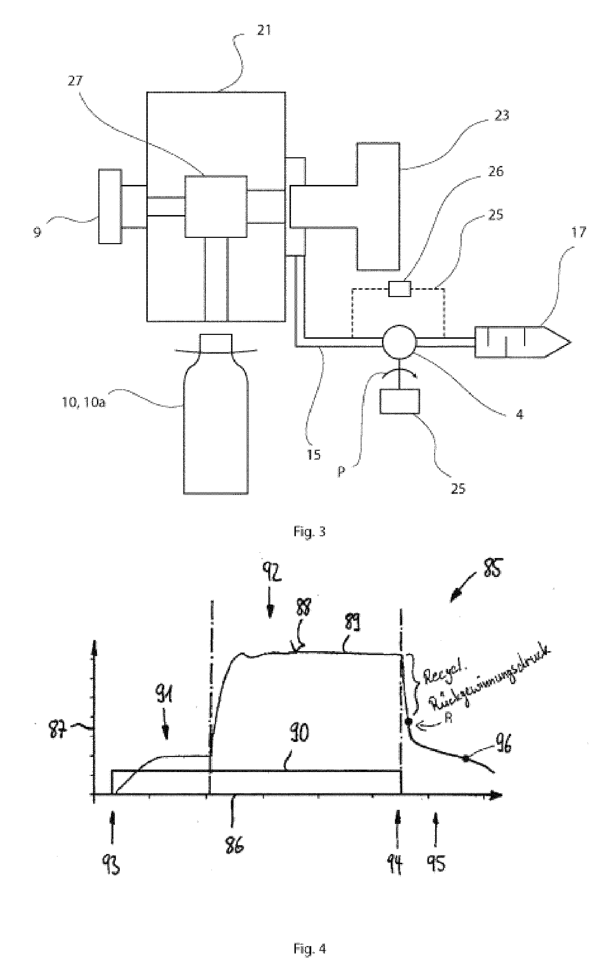

Fig. 3 zeigt schematisch den Aufbau des Leitungssystems in einer Umformungsvorrichtung 1. Durch entsprechende Anschlüsse 9, die über nicht gezeigte Leitungen mit den Druckreservoirs für die verschiedenen Drücke p1, p2 ... pi in Verbindung stehen, kann Gas des vorgesehenen Druckes in einen Ringraum 27 des Ventilblocks bzw. Blaskolbens 21 eingeleitet werden. Mittels des dort anliegenden Druckes kann ein Vorformling 10 zu einem Behälter 10a expandiert werden. Das dabei entstehende sterile und unter einem erhöhten Druck stehende Abgas wird aus dem Behältnis 10a und dem Leitungssystem durch einen EXH-Kolben 23 und den Abgaskanal (EXH-Kanal) 15 abgeführt. Im Abgaskanal 15 befindet sich eine Pumpe 4, die für einen kontinuierlichen Strom des Abgases in Richtung des Auslasses 17, der in diesem Fall einen Schalldämpfer aufweist, sorgt.

Im Fall einer großen Druckdifferenz zwischen dem reinraumseitigen Anteils des Abgaskanals 15 und dem Auslass 17 fungiert die Pumpe 4 als Turbine, die durch die durch sie hindurchströmende Luftströmung angetrieben und in Drehung (in Richtung des Pfeils P) versetzt wird. Die innere Energie (Strömungsenergie) des Abgases wird in Form von kinetischer Energie (Rotationsenergie) gespeichert, in dem eine Schwungmasse angetrieben wird. Nachdem im Behälter 10a und im Reinraum 20 bzw. dem sterilen Anteil des Abgaskanals 15 ein vorgegebener Druck unterschritten wird und somit keine ausreichende Druckdifferenz vorliegt, die eine kontinuierliche Strömung in Richtung des Auslasses 17 gewährleisten würde, wirkt die zuvor als Turbine wirkende Einrichtung 4 zur Gasdruckveränderung als Pumpe und sorgt für eine Aufrechterhaltung des kontinuierlichen Abgasstroms. Als Energiequelle wird dabei die in der Schwungmasse gespeicherte kinetische Energie. Wie bereits oben beschrieben ist jedoch bevorzugt zusätzlich eine andere Antriebsquelle für die Pumpe vorgesehen, um (z.B. nach einem CIP- oder SIP-Prozess) unabhängig von vorherigen Druckdifferenzen die kontinuierliche Strömung aufbauen zu können.

Wie durch die gestrichelt dargestellten Leitungen 25 veranschaulicht. kann optional ein Bypass-Kanal vorgesehen sein, der bevorzugt ein Rückschlagventil 26 aufweist. Dadurch kann beispielsweise wenn das EXH-Ventil geschlossen ist eine ausreichende Abführung des Gases gewährleistet werden. Außerdem kann ein solcher Bypass-Kanal 25 sinnvoll sein, um die Einrichtung 4 zur Gasdruckveränderung in ihrer Funktion als Turbine vor außergewöhnlichen Belastungen bei besonders hohen Druckdifferenzen zu schützen.

Das in der Fig. 4 gezeigte Diagramm 85 weist eine Zeit-Achse 86 und eine Druck-Achse 87 auf. In dem Diagramm 85 ist eine Druckkurve 88 hinsichtlich eines Prozessdrucks 89 sowie ein Steuerventil-Signal 90 eingezeichnet.

Die Druckkurve 88 bildet einen Vorformdruck p1 91 und einen Endformdruck p2 92 ab.

Wird das Steuerventil-Signal 90 zu einem Zeitpunkt 93 eingeschaltet, wird eine Steuerdruckkammer mit dem Steuerdruck beaufschlagt und das Entlastungsventil 13 schließt sich. Demzufolge kann der Prozessdruck 89 ansteigen und ein Kunststoffvorformling 10 entsprechend expandiert werden.

Wird das Steuerventil-Signal 90 zu einem späteren Zeitpunkt 94 abgeschaltet, öffnet sich das Entlastungsventil 13 und der Prozessdruck 89 wird entlastet.

Durch die Wirkung der Einrichtung 4 zur Gasdruckveränderung als Turbine flacht die Kurve nach Abschaltung der Abgasdruck-Rückgewinnung am Punkt R ab. Der Punkt R kennzeichnet demnach den Druck, bis zu dem Gas in die Ringkanäle p1 und Pi geleitet und somit recycelt wird. Erreicht der Prozessdruck 89 zu einem Entlastungszeitpunkt 95 einen vorbestimmten Antikontaminationsdruck 96, fungiert die Einrichtung 4 zur Gasdruckveränderung als Pumpe und sorgt für einen kontinuierlichen Strömungsverlauf, bevor durch starten des nächsten Entlastungsvorgangs wieder eine ausreichende Druckdifferenz gewährleistet ist. Der Antikontaminationsdruck 96 liegt insbesondere in einem Druckbereich von wenigen bar, insbesondere zwischen 0,5 und 5 bar, und besonders bevorzugt bei Atmosphärendruck.

Eine Zwangsentlastung des niedrigen Antikontaminationsdrucks 96 insbesondere aus dem Behältnis 10a kann beispielsweise beim Abheben einer Blasdüse an der Blasstation 8 erfolgen.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

1 : Umformungsvorrichtung
2 : Transportrad, Transporteinrichtung
4 : Einrichtung zur Gasdruckveränderung, Pumpe, Turbine
5 : Ringkanal p1
6 : Ventil p1
8 : Blasstation
9 : Anschluss
10 : Kunststoffvorformlinge
10a : Behältnis
11 : Ringkanal p2
12 : Ventil p2
13 : Ventil
14 : EXH-Ringkanal
15 : Abgasleitung, EXH-Kanal
16 : Ventil
17 : Auslass, Schalldämpfer
18 : Reinraumwandung
19 : CIP-, SIP-Kanal
20 : Reinraum
21 : Ventilblock, Blaskolben
22 : Zuführeinrichtung
23 : EXH-Kolben
24 : Abführeinrichtung
25 : Bypass-Kanal
26 : Rückschlagventil
27 : Ringraum
30 : Heizeinrichtung
31 : Heizelemente
32 : Sterilisationseinrichtung
34 : Transporteinrichtung
36 : Übergabeeinheit
37 : Transportrad
40 : Befüllungseinrichtung
42 : Übergabeeinheit
44 : Transporteinheit
50 : Anlage
85 : Diagramm
86 : Zeit-Achse
87 : Druck-Achse
88 : Druckkurve
89 : Prozessdruck
90 : Steuerventil-Signal
91 : Vorformdruck
92 : Endformdruck
93 : Zeitpunkt
94 : späterer Zeitpunkt
95 : Entlastungszeitpunkt
96 : Antikontaminationsdruck
97 : Atmosphärendruckniveau
P : Pfeil
R : Rückgewinnungsdruck
U : Umgebung

## Patentansprüche

1. Vorrichtung (1) zum Umformen von Kunststoffvorformlingen (10) zu Kunststoffbehältnissen (10a) mit einem Reinraum (20), mit wenigstens einer Blasstation (8) umfassend eine Blasform zur Formgebung der Kunststoffvorformlinge (10) mittels wenigstens eines Prozessdrucks (p1, pi, p2) und mit einer Entlastungseinrichtung (3) zum Entlasten des Prozessdrucks oder eines zu einem Rückgewinnungsdruck (R) reduzierten Prozessdrucks in die Atmosphäre (U), bei welcher die Entlastungseinrichtung (3) wenigstens eine Einrichtung (4) zur Gasdruckveränderung umfasst, **dadurch gekennzeichnet, dass** durch die Einrichtung (4) zur Gasdruckveränderung eine Druckdifferenz zwischen dem Reinraum (2) und/oder einer mit dem Reinraum verbundenen Ablassleitung (14, 15) und der Entlastungseinrichtung (3) herstellbar, aufrechterhaltbar, und insbesondere auch einstellbar, ist.

2. Vorrichtung (1) nach Anspruch 1, **dadurch gekennzeichnet, dass** die Entlastungseinrichtung (3) eine Ventileinrichtung (16, 23) aufweist, die eine Reinraumgrenze (18) darstellt.

3. Vorrichtung (1) nach einem der vorangegangenen Ansprüche, **dadurch gekennzeichnet, dass** die Entlastungseinrichtung (3) eine Zu- und/oder Ableitung (19) für ein Reinigungs- und/oder Sterilisationsmittel aufweist, wobei diese Zuleitung (19) bevorzugt an der Reinraumgrenze (18) in die Entlastungseinrichtung mündet.

4. Vorrichtung (1) nach einem der vorangegangenen Ansprüche, **dadurch gekennzeichnet, dass** die Einrichtung (4) zur Gasdruckveränderung eine Pumpe, Turbine oder Venturidüse umfasst.

5. Vorrichtung (1) nach Anspruch 4, **dadurch gekennzeichnet, dass** die Einrichtung (4) zur Gasdruckveränderung sowohl als Pumpe als auch als Turbine betreibbar ist.

6. Vorrichtung (1) nach einem der vorangegangenen Ansprüche 2 - 5, **dadurch gekennzeichnet, dass** die Einrichtung (4) zur Gasdruckveränderung stromabwärts der Ventileinrichtung (16, 23) angeordnet ist und/oder die Einrichtung (4) zur Gasdruckveränderung mit einer Schwungmasse verbunden ist.

7. Vorrichtung (1) nach einem der vorangegangenen Ansprüche, **dadurch gekennzeichnet, dass** die innere Energie des Abgases zumindest teilweise in einer Schwungmasse zumindest temporär speicherbar ist.

8. Vorrichtung (1) nach einem der vorangegangenen Ansprüche, **dadurch gekennzeichnet, dass** die Zuleitung (19) für ein Reinigungs- und/oder Sterilisationsmittel an der Reinraumgrenze (18) in die Ventileinrichtung (16) mündet.

9. Vorrichtung (1) nach einem der vorangegangenen Ansprüche, **dadurch gekennzeichnet, dass** die Entlastungseinrichtung (3) mehreren, bevorzugt allen, Blasstationen (8) der Vorrichtung (1) zugeordnet ist.

10. Anlage zum Behandeln von Behältnissen (2), **dadurch gekennzeichnet, dass** sie eine Vorrichtung (1) gemäß einem der vorangegangenen Ansprüche aufweist.

11. Verfahren zum Umformen von Kunststoffvorformlingen (10) zu Kunststoffbehältnissen (10a) in einem Reinraum (20) mittels wenigstens einer Blasstation (8) umfassend eine Blasform in der zur Umformung der Kunststoffvorformlinge (10) diese mit wenigstens einem Prozessdruck (p1, p2, pi) beaufschlagt werden und der Prozessdruck oder ein zu einem Rückgewinnungsdruck (R) reduzierter Prozessdruck mittels einer Entlastungseinrichtung (3) in die Atmosphäre (U) entlastet wird, wobei der Gasdruck in der Entlastungseinrichtung (3) zumindest temporär durch wenigstens eine Einrichtung (4) zur Gasdruckveränderung verändert wird, **dadurch gekennzeichnet, dass** durch die Einrichtung (4) zur Gasdruckveränderung eine Druckdifferenz zwischen dem Reinraum (2) und/oder einer mit dem Reinraum verbundenen Ablassleitung (14, 15) und der Entlastungseinrichtung (3) hergestellt und/oder eingestellt und/oder aufrechterhalten wird.

12. Verfahren nach Anspruch 11, **dadurch gekennzeichnet, dass** die Druckdifferenz zwischen dem Reinraum (2) und der Entlastungseinrichtung (3) mittels einer Pumpe eingestellt und/oder aufrechterhalten wird.

13. Verfahren nach Anspruch 11 oder 12, **dadurch gekennzeichnet, dass** zumindest ein Anteil einer inneren Energie des Abgases zumindest zeitweise durch eine Turbine rückgewonnen wird.

14. Verfahren nach Anspruch 13, **dadurch gekennzeichnet, dass** die durch die Turbine rückgewonnene Energie in einer Schwungmasse in Form kinetischer Energie zumindest temporär gespeichert wird.

15. Verfahren nach einem der Ansprüche 11 bis 14, wobei durch die Entlastungseinrichtung (3) ein ständiges Strömen von Gas aus dem Reinraum und/oder einer mit dem Reinraum verbundenen Leitung (14, 15) bei einer geöffneten Verbindung (13) verursacht wird.
